# EUROPEAN PATENT APPLICATION

(11) **EP 2 642 445 A1**
(43) Date of publication of application: **25.09.2013**
(21) Application number: 13155530.2
(22) Date of filing: 15.02.2013
(51) Int. Cl.: G06Q 30/06, G07G 1/00

(54) **Network-based self-checkout**

(30) Priority: 23.03.2012 US 201213428623
(71) Applicant: NCR Corporation, Duluth, GA 30096 (US)
(72) Inventor: Smith, Graeme, Dundee, Tayside DD5 3SU (GB)
(74) Representative: MacLeod, Roderick William

(57) **Abstract**

Techniques for network-based self-checkout are provided. A consumer of an establishment uses a mobile app to self-scan barcodes of items for purchase. A running list of the items is maintained by a network shopping manager. The consumer uses the app to purchase the items when desired and the shopping manager sends a code to the app to validate the purchase. When exiting the establishment, the app provides the code to a self-service checkout system (300) and as the customer bags the items, each item is validated against the list without requiring any additional action on the part of the consumer.

## Description

Consumers are increasingly using kiosks to conduct business with enterprises. The kiosks come in a variety of sizes and are used for a variety of purposes. Some kiosks are drive through, such as fast food establishments, pharmacies, banks, and the like. Other kiosks are stationary located in gas stations, airlines, grocery stores, department stores, and the like.

In addition, what is considered a kiosk is evolving with today's technology. For example, digital signs now provide advertisements and mechanisms for users to interact with the displays to perform transactions. Such mechanisms include blue tooth communication, Near Field Communication (NFC), Quick Response (QR) (trade mark) code scanning, Wi-Fi communication, and the like.

One industry that has been quick to adopt self-service kiosks is the retail industry and in particular grocery chains. Margins on groceries are small and most grocery stores incur a majority of their expenses in staffing and equipment. Self-service kiosks are expensive, require support and maintenance and are sometimes viewed as obtrusive or difficult to use.

Thus, some grocery stores have removed previously installed self-service checkout stations because customers do not use them enough to justify the related expense. Moreover, an attendant needs to be present in the self-service checkout aisle at all times to ensure a customer is not cheating or is not purchasing an item that requires identification, such as alcohol or tobacco. Still further, because some customers struggle with scanning their bar codes, the time it takes a customer to move through a self-service checkout station is much slower than that which is associated with a manned checkout station. As a result, customers with more than a few items for purchase often entirely skip the self-service checkout station and instead opt for waiting in line for a manned checkout station.

So although the retail industry has helped pioneer self-service checkout technology, the retail industry is still struggling with customer adoption of the technology and with controlling expenses associated with justifying continued deployment of that technology.

In various embodiments, techniques for network-based self-checkout are presented. According to an embodiment, a method for network-based self-checkout is provided.

Specifically, a consumer is identified via interaction with a mobile app over a network connection. One or more identifiers for one or more items to be purchased by the consumer are received back from the mobile app as the consumer shops within an establishment. At some point or on demand, a list for the one or more items and transaction details are communicated to the mobile app for presentation to the consumer on a display of a mobile device having the mobile app. Next, interaction with the mobile app occurs to complete the purchase of the one or more items and a validation code is sent to the mobile app that validates the now completed purchase. Finally, the validation code is subsequently presented by a self-service checkout system after the consumer provides the validation code to the self-service checkout system via the mobile app. The list is then provided back to the self-service checkout system for validating each item identified in the list while the consumer bags the items at the self-service checkout system.

According to a first aspect of the present invention there is provided a processor-implemented method programmed in a non-transitory processor-readable medium and to execute on one or more processors of a server configured to execute the method, comprising: identifying, via the server, a consumer through interaction with a mobile app over a network connection; receiving from the mobile app and at the server, one or more identifiers for one or more items to be purchased by the consumer; communicating, by the server, a list for the one or more items and transaction details to the mobile app for presentation to the consumer on a display of a mobile device having the mobile app; interacting, via the server, with the mobile app to complete purchase of the one or more items; sending, by the server and to the mobile app a validation code that validates the completed purchase; and acquiring, by the server, the validation code presented by a self-service checkout system and providing the list back to the self-service checkout system for validating each item identified in the list while the consumer bags the items at the self-service checkout system.

Identifying optionally further includes recognizing the mobile device and/or the mobile app as a previously registered mobile app linked to the consumer.

Identifying optionally further includes performing authentication on the consumer via the mobile app via: credentials supplied by the consumer to recognize the consumer and/or via facial recognition on the consumer against a face of the consumer previously registered.

Identifying optionally further includes generating a unique transaction token and providing back to the mobile app, the unique transaction token tying all communication between the mobile app and the server to the consumer and a transaction associated with the one or more items.

Receiving optionally further includes obtaining each of the one or more identifiers as encoded information representing a bar code or Quick Response (QR) code that was scanned by the consumer using a scanner or a camera embedded in the mobile device and interfaced to the mobile app.

Obtaining optionally further includes accessing a particular establishment's backend system to link the encoded information to at least an item description and an item price that are included in the transaction details for the list.

Communicating optionally further includes dynamically interacting with the mobile app to remove selective items from the list along with those selective items portion of the transaction details as directed by the consumer via the mobile app.

Interacting optionally further includes modifying selective portions of the transaction details based on scanned coupons presented by the consumer via the mobile app.

Interacting optionally further includes crediting a loyalty account linked to the consumer based on the completed purchase.

Interacting optionally further includes permitting the consumer to complete the purchase using the mobile app via one or more of: a pre-registered payment method, a manually entered payment method, a gift card payment method, and a third-party payment system.

Sending optionally further includes communicating the validation code as one of: a barcode, a Quick Response (QR) code, a string of characters, and a number.

According to a second aspect of the present invention there is provided a processor-implemented method programmed in a non-transitory processor-readable medium and to execute on one or more processors of a mobile device configured to execute the method, comprising: initiating, via the mobile device, a network connection to a network-based shopping manager; receiving, via the mobile device, a transaction token from the network-based shopping manager after successful authentication of the mobile device and a consumer associated with the mobile device; communicating, to the network-based shopping manager and via the mobile device using the transaction token, codes for items scanned for purchase by the consumer using a scanner or camera of the mobile device; presenting on a display of the mobile device a list with transaction details for the items as provided by the network-based shopping manager; interacting via the mobile device with the consumer and the network-based shopping manager for completing payment of a transaction; storing on the mobile device a validation token received from the network based shopping manager indicating the items of the list have been paid for by the consumer; and providing the validation token to a self-service checkout system, the validation token validates the completed payment, when the consumer bags the items at the self-service checkout station.

Initiating optionally further includes establishing the network connection as one or more of: a Wi-Fi connection, a cellular connection, and a satellite connection.

Interacting optionally further includes applying changes to the items and the transaction details on the direction of the consumer.

Interacting optionally further includes applying discounts to the transaction details identified by the consumer and confirmed and applied via the network-based shopping manager.

Providing optionally further includes presenting the validation token to the self-service checkout system automatically from the mobile device via one of: an image of a barcode or Quick Response (QR) code presented to a scanner or camera of the self-service checkout system, a Bluetooth communication to a Bluetooth device of the self-service checkout system, a Wi-Fi communication to a Wi-Fi device of the self-service checkout system, and a Near Field Communication (NFC) to an NFC device of the self-service checkout system.

Providing optionally further includes presenting the validation token as a unique transaction number or string on a display of the mobile device that the consumer views and manually enters into the self-service checkout system using a touchscreen input device of the self-service checkout system.

According to a third aspect of the present invention there is provided a system comprising: a scanning device configured with a scanning agent implemented within a non-transitory computer-readable storage medium and that executes on one or more processors of a self-service checkout system; and the one or more processors of the self-service checkout system being configured with a validation agent implemented within a non-transitory computer-readable storage medium and that executes on the one or more processors; the scanning agent being configured to scan a validation token from a mobile device of a consumer and present the validation token to a network-based shopping manager to acquire a list of items purchased by the consumer, the validation agent being configured to activate a camera of the self-service checkout system and take images of each item as it is placed in a bag by the consumer at the self-service checkout system, the validation agent also being configured to verify a match for each captured image with a known image for a known item identified in the list for purposes of validating the list of items purchased by the consumer.

The system optionally further comprises, a weighing device interfaced to the one or more processors of the self-service checkout system that are also configured with a weight confirmation agent implemented within a non-transitory computer-readable storage medium and that executes on the one or more processors, the weight confirmation agent being configured to compare a weight measured by the weighing device for each item against a known weight for a known item identified in the list for purposes of confirming the list of items purchased by the consumer as each item is placed in the bag by the consumer at the self-service checkout system.

The scanning agent is optionally further configured to flood a bagging area of the self-service checkout system with multiple laser scanning lines from multiple angles to automatically capture barcodes associated the items as the consumer bags the items at the self-service checkout system and the validation agent is further configured to lookup barcode information for each item and cross check against known barcode information for the list.

These and other aspects of the present invention will be apparent from the following specific description, given by way of example, with reference to the accompanying drawings, in which:

FIG. 1 is a diagram of a method for network-based self-checkout, according to an example embodiment;

FIG. 2 is a diagram of another method for network-based self-checkout, according to an example embodiment; and

FIG. 3 is a diagram of a retail self-checkout system, according to an example embodiment.

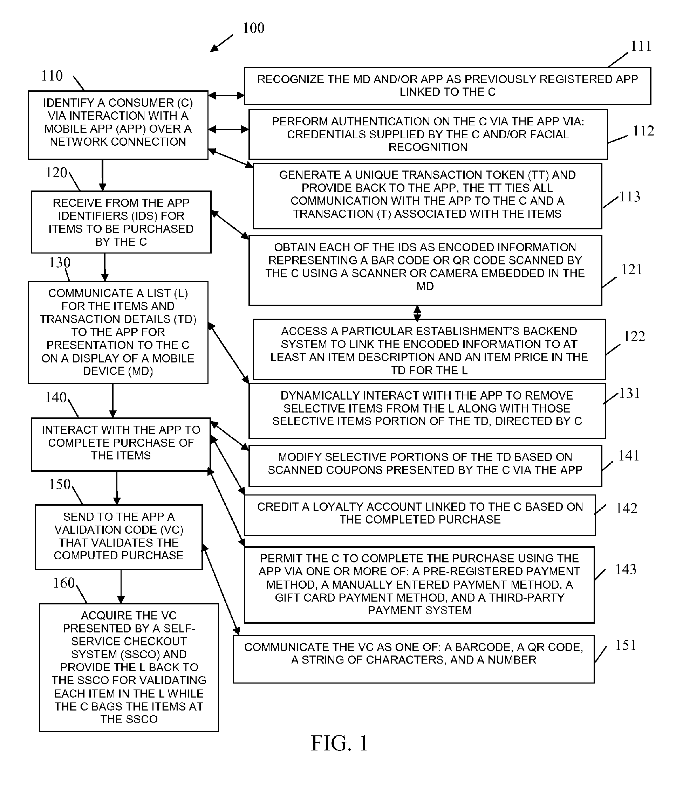

FIG. 1 is a diagram of a method 100 for network-based self-checkout, according to an example embodiment. The method 100 (hereinafter "network-based shopping manager") is implemented as instructions programmed and residing on a non-transitory computer-readable (processor-readable) storage medium and executed by one or more processors (e.g., server, cloud, virtual machine (VM), etc.) over a network connection. The processors are specifically configured and programmed to process the network-based shopping manager. The network-based shopping manager operates over a network. The network is wired, wireless, or a combination of wired and wireless.

The network-based shopping manager executes on one or more processors of over a network connection. The network-based shopping manager interacts over the network connection with a mobile device app (may also be referred to as a "mobile agent" herein). The mobile device app processes on a mobile device of a customer, such as, and by way of example only, a smart phone, a tablet, a personal digital assistant (PDA), a laptop, and the like. The network connection can include cellular, satellite, Wi-Fi, Bluetooth, or various combinations of these connections. Moreover, the network connection can be via a Local-Area Connection (LAN) within a particular geographic area (such as a specific retail establishment) or the network connection can be via a Wide-Area Connection (WAN) operable notwithstanding geographic locale (such as the Internet).

Moreover, the network-based shopping manager can be hosted within a network hosted by a retail establishment in which it is deployed or can be hosted via third-party enterprises as a service provided to that retail establishment. Thus, a retail establishment can outsource deployment and management of the network-based shopping manager to different vendors or suppliers of the establishment.

In an embodiment, the network-based shopping manager is accessible via a cloud processing environment over the Internet. The cloud processing environment includes one or more processing environments configured to deploy and operate the network-based shopping manager via an Internet connection having Application Programming Interfaces (APIs) to interact with the customer's mobile device app and backend systems of a retail establishment (transaction processing, loyalty processing, and the like).

Various embodiments of the invention provides a technique for off-loading as much as is feasible a typical retail transaction to the customer (the terms "customer" and "consumer" may be used interchangeably herein and below). The embodiments also complete as much of the customer transaction with the retail establishment as is feasible during the time the customer meanders about the retail establishment. So, time conventionally spent checking out is used while the customer wanders the establishment.

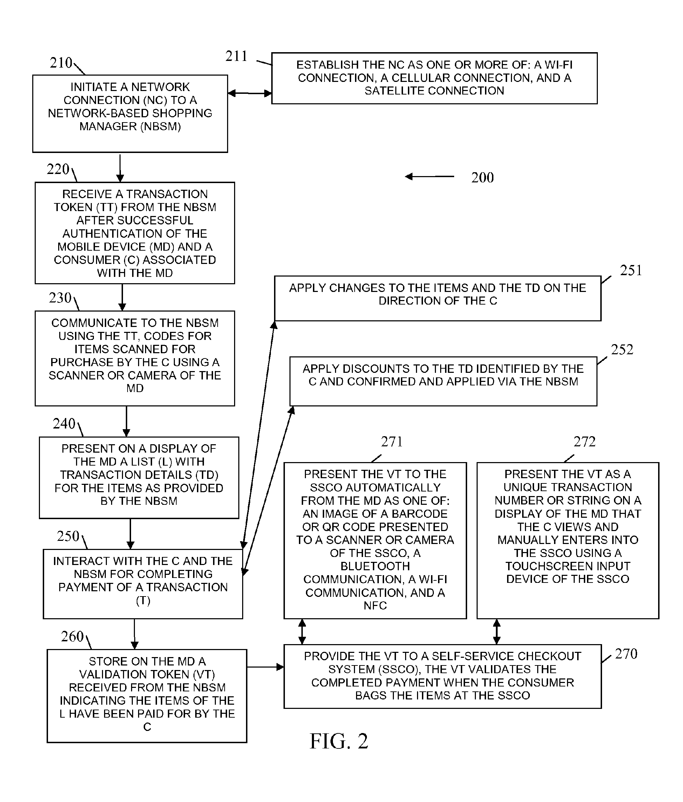

In an embodiment, this is achieved via a server or cloud-based network shopping manager and a customer mobile app installed on a mobile device of the customer (mobile app discussed below in detail with reference to the FIG. 2). The mobile app initiates with a connection to the network-based shopping manager and receives back a unique token for the customer and the transaction that is about to commence within the retail establishment. The mobile app is used to self-scan articles/items as the customer wanders around the store. This creates a shopping list with the network-based shopping manager and maintains a running total of the cost being incurred by the customer. This also allows the customer to then checkout (pay for the purchases collected) as soon as the customer has collected the last desired item that he/he wants to buy. All interaction achieved via the mobile app and the network-based shopping manager. After this, the network-based shopping manager sends a verification barcode to the app to indicate that the goods/items have been paid for.

Continuing with the example embodiment and once the customer has paid for the desired shopping list of items; the customer makes his/her way to a bagging area. In an embodiment, the bagging area is ergonomically laid out within the retail establishment to assist and optimize the customer's bagging activities in a manner that focuses on bagging, rather than the traditional bar code scan and payment functions. A new and novel bagging area can include a multi-stage verification of the shopping list performed in an unobtrusive and in some aspects transparent manner to the customer.

For example, as a first stage of verification, the customer simply swipes an image of his/her barcode (payment verification provided by the network-based shopping manager) under a scanner of a self-service checkout system (SSCO) in the new bagging area. The barcode permits the SSCO to connect with the network-based shopping manager and acquire the shopping list of items.

Still continuing with the example embodiment and during a second stage of verification at the novel bagging area, as the customer bags the items (moves the purchased items from the store shopping cart to bags), the items being bagged are scanned and/or images of the items are captured. In an embodiment, the scanning is achieved via a laser that is not a typical bi-optic scanner; rather, the laser floods a large physical area around the bags with scan lines. So, the barcode is read while the customer is moving items from his/her cart into bags and without any special action on the part of the customer.

In a third stage for the example embodiment, the items can also be visually captured as images as they are being placed in the bags and these visually captured images can be compared against known visual images for the items. The comparison involves a much smaller universe of candidate images because only the known images for what is identified in the shopping list needs to be used as candidate matches for the items being captured.

In a fourth stage of verification for the example embodiment, as the items are being bagged the weight of each item is noted as that item is placed in a bag. Each item weight recorded in the bag is then compared against a known weight for that item (again the known weights can be obtained via the shopping list).

At any of point during the stages of verification should verification fail an alert or notification can be automatically sent to the SSCO and to store personnel for purposes of assisting the customer. It may not always be the case that the customer is attempting to steal an item as there may be other valid error situations in which assistance from store personnel is warranted. In some cases, the customer may even be asked if they would like to purchase a specific unaccounted for item automatically via an interface display of the SSCO when the unaccounted for item can be successfully identified during verification stages 2-4.

It should also be noted that only stage 1 and one additional stage (2, 3, or 4) is needed for any particular embodiment presented herein. However, stage 1 and various combinations of stages 2-4 (or all of stages 2-4) can be used as well in other embodiments. Moreover, the manner in which stage 1 is completed can vary (as discussed below) and stages 2-4 can occur in a manner that is completely transparent and unknown to the customer. It is also noted that in some situations the manner in which stage 1 is completed may be transparent to the customer as well (such as automated communication of the barcode verification without action of the customer from either the network-based shopping manager and/or the mobile app).

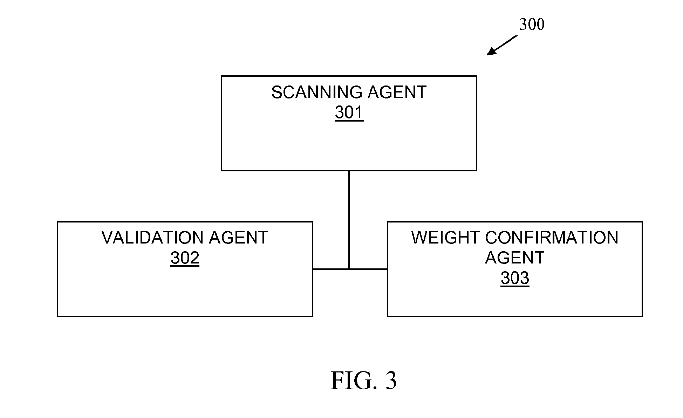

The processing associated with the remote server or cloud interaction is discussed with reference to the network-based shopping manager of the FIG. 1. The processing associated with the customer's mobile app, via the customer's mobile device, is discussed below with reference to the FIG. 2. Finally, the system and processing associated with the above-discussed verification states 1-4 is discussed below with reference to the FIG. 3.

It is within this initial context that the processing of the network-based shopping manager is discussed with reference to the FIG. 1.

At 110, the network-based shopping manager identifies a consumer via interaction with a mobile app of the consumer (mobile app processing discussed below with reference to the FIG. 2). The mobile app processes on a mobile device of the consumer (e.g., smart phone, tablet, laptop, etc.).

Communication between the network-based shopping manager and the mobile app occurs via a wireless network connection. This identification and communication between the network-based shopping manager and the consumer (via the mobile app) take place within a physical retail establishment (brick-and-mortar store). In other words, the consumer is physically shopping at a particular store and actively using his/her mobile device to interact with the network-based shopping manager.

Identification of the consumer and the mobile app by the network-based shopping manager can occur in a variety of manners.

For example, at 111, the network-based shopping manager recognizes the mobile device and/or the mobile app as being a previously registered app, which the network-based shopping manager has already linked to the consumer or an account of consumer with a retail establishment. So, as a further example, the consumer downloaded and installed the mobile app on the mobile device and then followed instructions when the mobile app is initiated to register and link the mobile app with the account of the consumer. In some cases, the account is a loyalty-based account for the consumer tied to a particular retail establishment.

It should also be noted that the consumer may download, install, and register the mobile app while in the retail establishment, such that the previously registered version occurs just before the consumer begins to shop within the retail establishment. The retail establishment may even advertise throughout the store that the mobile app is available for download. In some cases, the retail establishment may even provide fee Wi-Fi for the consumer to connect to the network-based shopping manager. Thus, distribution of the mobile app can occur over the Wi-Fi in a LAN within the store, over a website, and/or over a conventional app store remote network location. The actual processing of the network-based shopping manager as it interacts with the mobile app can occur solely within the LAN or over a WAN that the LAN is connected with. Any desired architectural arrangement can be achieved depending upon the needs and/or licensing agreements of the establishment and/or vendor of the network-based shopping manager.

In yet another situation, at 112, the network-based shopping manager performs authentication on the consumer via credentials supplied by the consumer. Again, this is a configurable option that can be required by the establishment and/or the consumer. In some cases, the authentication can occur in a transparent manner to the consumer, such as via interaction between the mobile app and the network-based shopping manager using previously provided credentials. In other cases, the authentication can occur in a manually driven manner where the consumer is asked for credentials that are not stored on the mobile device, such as a password and/or identifier. In yet more cases, a multifactor authentication can be used where some aspects of the authentication occur in transparent and automated manners between the mobile app and the network-based shopping manager and other aspects of the authentication occur in a manually driven manner by interacting with the consumer to acquire some portion of the credentials. In one case, the authentication is achieved via facial recognition via cameras or videos placed throughout the store. The consumer pre-registers for their face to be captured and used for authentication. In such a case, the consumer is not really providing anything; rather, a picture of the consumer is automatically acquired and associated with the consumer via facial recognition algorithms. The degree and strength of authentication can be a configured option associated with the network-based shopping manager and can be provided by the consumer, the establishment, and/or a vendor of the network-based shopping manager.

In a scenario, at 113, the network-based shopping manager generates a unique transaction token for a shopping transaction between the consumer and the retail establishment. This token can be used by the mobile app to identify the shopping transaction and the consumer with each communication between the mobile app and the network-based shopping manager and can be used to recall the shopping transaction by the SSCO (processing discussed below with reference to the FIG. 3). The token is sent from the network-based shopping manager to the mobile app for the mobile app to manage on the mobile device of the consumer.

At 120, the network-based shopping manager receives from the mobile app identifiers for items potentially being purchased by the consumer while in the store. It is noted that a good can be a gift card for a service or a product.

According to an embodiment, at 121, the network-based shopping manager obtains each identifier as encoded information representing a bar code or a Quick Response (QR) code that is scanned by the consumer using a camera or scanner embedded in the mobile device. The mobile app may translate the encoded information directly from the image captured on the item and send the translated information to the network-based shopping manager for processing or the mobile app may send the image itself to the network-based shopping manager for translation.

Continuing with the embodiment of 121 and at 122, the network-based shopping manager accesses a particular retail establishment's backend system (e.g., database, Application Programming Interfaces (APIs), etc.) to link the encoded information to at least an item description and an item price (used with the transaction details and discussed at 130 with the running shopping list of the consumer). It is noted that in situations where the network-based shopping manager is integrated within the backend system of the establishment, the processing of 122 is not needed because the network-based shopping manager is native to the architecture of the establishment. However, the processing of 122 is particularly beneficial when the network-based shopping manager is provided as third-party services to multiple establishments as a cloud-based product offering and in such situations secure communications and authentication between the backend system and the network-based shopping manager take place in automated manners.

At 130, the network-based shopping manager communicates a shopping list for the items and transaction details to the mobile app for presentation to the consumer on a display of the mobile device. The transaction details include at a minimum an item description for a particular item being purchased and an item price for that item. Other information can be includes as well, such as: an item quantity identifier; a price reduction amount for coupons or loyalty customers; perhaps a hypertext link to equivalent alternative generic store-based products along with such product prices; special store-based offers such as buy 2 get one free, and the like.

In an embodiment, at 131, the network-based shopping manager dynamically interacts with the mobile app to remove selective items from the shopping list along with those selective items portion of the transaction details that relate to the removed items. This removal of items occurs at the direction of the consumer. So, the consumer can actively modify and adjust the shopping list as needed.

At 140, the network-based shopping manager interacts with the mobile app to complete the purchase of the items. This can occur at any location within the store and at any time triggered or requested by the consumer via options presented to the consumer from the mobile app.

According to an embodiment, at 141, the network-based shopping manager modifies selective portions of the transaction details based on scanned coupons presented by the consumer via the mobile app. In a manner similar to how items are scanned to place in the list, the consumer can apply manufacturer or store-issued coupons to reduce prices associated with the items before the consumer completes the purchase of the items. It should also be noted that the network-based shopping manager can be configured to receive and apply the coupons for items in the shopping list at any time during the shopping experience. Should the consumer scan a coupon before an item code is actually scanned, the network-based shopping manager can be configured with the mobile app to show the reduction as being available but unapplied until the item's code is actually scanned. In this latter situation, the consumer may actually be reminded when attempting to complete the transaction with purchase that specific items having coupons were not purchased and asked if such items are still desired or if the consumer wishes to remove such coupons, so that the coupons remain valid for subsequent purchasing transactions.

In another situation, at 142, the network-based shopping manager is also configured to interact with the establishment's loyalty system to credit a loyalty account linked to the consumer based on the completed purchase and the transaction details.

In yet another case, at 143, the network-based shopping manager permits the consumer complete the purchasing using the mobile app via one or more mechanisms, such as: using a pre-registered and preferred payment method of the consumer, a manually entered payment method provided by the consumer via the mobile app, a gift card payment method, a loyalty points payment method, and/or a third-party payment system (e.g., PayPal® and the like). It is noted that the consumer can use a single payment method or a combination of payment methods, such as when loyalty point balances or gift card balances are insufficient to pay a complete purchase price for the transaction and multiple payment methods are needed.

At 150, the network-based shopping manager sends a validation code back to the mobile app that serves as automated validation, from the mobile app to validate the purchase was completed for the shopping list of items.

According to an embodiment, at 151, the network-based shopping manager communicates the validation code as one of: a barcode, a QR code, a string of characters, and a number. Subsequent usage of this validation code and its various forms are described more completely below with reference to the FIGS. 2-3.

At 160, the network-based shopping manager acquires the validation code back from a SSCO when the consumer is in the bagging area (discussed above and discussed below with reference to the FIG. 3). In response to receiving the validation code from the SSCO, the network-based shopping manager provides back to the SSCO the shopping list or metadata describing various aspects of the items in the shopping list. This is used (as was discussed above and will be discussed below with reference to the FIG. 3) by the SSCO for one or more stages of verification of each item while the consumer bags the times at the SSCO.

The processing of the network-based shopping manager has now been discussed at length. The processing associated with the actions of the mobile app is now presented with reference to the FIG. 2. The processing associated with the SSCO in the bagging area is presented after the FIG. 2 with reference to the FIG. 3.

FIG. 2 is a diagram of another method 200 for network-based self-checkout, according to an example embodiment. The method 200 (hereinafter "mobile device app") is implemented as instruction and programmed within a non-transitory computer-readable (processor-readable) storage medium that executes on one or more processors of a consumer's mobile device (e.g., smart phone, tablet, PDA, laptop, etc.); the processors of the mobile device are specifically configured to execute the mobile device app. The mobile device app is also operational over a network; the network is wired, wireless, or a combination of wired and wireless.

The mobile device app interacts with the network-based shopping manager (discussed above with reference to the FIG. 1) to provide novel techniques for transacting and shopping within a retail establishment.

The manner in which the mobile device app is initially registered to a network-based shopping manager (FIG. 1), downloaded, and installed on the mobile device was presented above in detail with the initial discussion of the FIG. 1.

At 210, the mobile device app initiates a network connection to a network-based shopping manager (such as the network-based shopping manager discussed and presented above with reference to the FIG. 1). Connection can occur in a variety of manners.

For example, at 211, the mobile device app can establish the network connection as one or more of: a Wi-Fi connection within the retail establishment, a cellar connection, and/or a satellite connection.

It is also noted that the connection can be over a LAN and/or a WAN, such as the Internet.

At 220, the mobile device app receives a transaction token from the network-based shopping manager after successful authentication of the mobile device and a consumer that is associated with the mobile device. Again, as was discussed above with reference to the FIG. 1, authentication can occur in automated manners, manually interactive manners, or combinations of both automated and manually interactive manners. Moreover, the authentication mechanisms are configurable options to the mobile device app and/or the network-based shopping manager. Configuration can be done via the consumer, the retail establishment, and/or a vendor of the network-based shopping manager and the mobile device app.

At 230, the mobile device app communicates to the network-based shopping manager using the transaction token. Codes for the items are scanned for potential purchase by the consumer using a scanner or a camera of the mobile device. Output of the scan provided or accessible on the mobile device to the mobile device app.

At 240, the mobile device app presents on a display of the mobile device a shopping list with transaction details (discussed above with reference to the FIG. 1) for items (goods) as provided and managed by the network-based shopping manager.

At 250, the mobile device app interacts with the consumer and the network-based shopping manager for completing payment of a transaction. The transaction tied to the unique transaction code supplied by the network-based shopping manager.

According to an embodiment, at 251, the mobile device app applies changes to the items and the transaction details on the direction of the consumer interacting with API options provided by the mobile device app to the consumer on the mobile device. Such changes can be increasing a quantity associated with a particular item and/or removing one or more items from the shopping list or adjusting downward a quantity associated with a particular item within the shopping list.

In another situation, at 252, the mobile device app applies discounts to the transaction details identified by the consumer and confirmed and applied by the network-based shopping manager. Here, coupons can be scanned, loyalty points applied, etc.

At 260, the mobile device app stores on the mobile device a validation token received back from the network-based shopping manager, which indicates that the items of the shopping list have been paid for by the consumer.

At 270, the validation token is provided to a SSCO at a bagging area within the establishment. The validation token serves as validation that the consumer has completed payment for the items in the shopping list before the consumer begins to bag the items at the SSCO or within the bagging area of the establishment.

According to an embodiment, at 271, the mobile device app presents the validation token to the SSCO automatically from the mobile device as one of: an image of a barcode or QR code presented to a scanner or camera of the SSCO, a Bluetooth communication between the mobile device and a Bluetooth driver device of the SSCO, a Wi-Fi communication between the mobile device and a Wi-Fi driver device of the SSCO, and/or a NFC code communicated between the mobile device and a NFC driver device of the SSCO.

In an alternative arrangement, at 272, the validation token as a unique transaction number or string on a display of the mobile device that the consumer views and then manually enters into the SSCO using a touchscreen input device of the SSCO.

It is noted that any interaction, if any, that is manually required by consumer to physically leave the establishment is associated with the presentation of the validation code to the SSCO as described at 271 and 272. The consumer does not have to physically scan each item's barcode into the scanner of the SSCO, which has conventionally been the case; rather, 2-4 stages of automated validation occur by the SSCO, in an automated fashion, while the consumer simply bags the items at the SSCO (bagging area).

The processing associated with the 2-4 stages of automated validation and the SSCO is presented below with reference to the FIG. 3.

FIG. 3 is a diagram of a retail self-checkout system 300, according to an example embodiment. The components of the retail self-checkout system 300 are implemented as executable instructions and programmed within a non-transitory computer-readable (processor-readable) storage medium that execute on one or more processors of a self-service checkout system; the processors of the self-service checkout system are specifically configured to execute the components of the retail self-checkout system 300. The retail self-checkout system 300 is also operational over a network; the network is wired, wireless, or a combination of wired and wireless.

The retail self-checkout system 300 includes a scanning agent 301 and a validation agent 302. In an embodiment, the retail self-checkout system 300 also includes a weight confirmation agent 303. Each of these components and the interactions of each component are now discussed in turn.

The retail self-checkout system 300 includes a scanning device interfaced to one or more processors of a self-service checkout system within a retail establishment. The one or more processors executing instructions for the scanning agent 301, which resides and is programmed within a non-transitory computer-readable storage medium accessible to the self-service checkout system.

The scanning agent 301 is configured to scan a validation token from a mobile device of a consumer and present the validation token to a network-based shopping manager to acquire a list of items purchased by the consumer. The acquisition and management of the list of items discussed above with reference to the FIGS. 1 and 2. Moreover, the creation and delivery of the validation token proving payment for the list of items were discussed above with reference to the FIGS. 1 and 2. The consumer is ready to leave the store (establishment) when the validation token is acquired by the scanning agent 301 and all that remains is bagging of the items by the consumer and validation processing by the store via the self-checkout system 300. The validation token permits the self-checkout system 300 to validate via the network-based shopping manager that items were purchased by the consumer and identify each of this items by acquiring the list and metadata (electronic descriptive details) for each item, which are then used for validation by the validation agent 302.

According to an embodiment, the scanning agent 301 is further configured to flood a bagging area of the self-service checkout system with multiple lasers that can scan lines of information from multiple angles for purposes of automatically capturing barcodes associated the items as the consumer bags the items at the self-service checkout system and the validation agent 302 is further configured to lookup barcode information for each item and cross check against known barcode information for the list.

So, the self-checkout system 300 after verifying payment and a list of items for the consumer, via the validation code can perform the flood operation as a form of validation to cross check what the consumer is placing in the bags with what is identified in the shopping list. It is noted that one or more other forms of validation can also take place as described below to further ensure the store that the consumer is leaving the store with just the items that the consumer purchased and each of these forms of validation occurs without manual action of the consumer and while the consumer simply bags items to leave the store.

The one or more processors of the retail self-checkout system 300 also include a validation agent 302 that execute instructions for the validation agent 302, which resides and is programmed within a non-transitory computer-readable storage medium accessible to the self-service checkout system.

The validation agent 302 is configured to activate a camera of the self-service checkout system and take images of each item as it is placed in a bag by the consumer at the SSCO. The validation agent 302 is also configured to verify a match for each captured image with a known image for a known item identified in the list for purposes of validating the list of items purchased by the consumer. So, rapid image matching techniques takes place to score images of items and compare those scores against known scores for known images identified in the shopping list. Threshold values can be used to ensure the scores are within predefined ranges to verify an image match. Should a match not occur for a bagged item, the validation agent 302 can raise alerts to the consumer and/or store personnel to get the consumer assistance. In some situations, the consumer may be offered an option in an automated fashion via the SSCO to purchase any suspect item, which was not in the original validated shopping list.

It is noted, that the validation agent 302 may also perform the validation discussed above using a flood laser scan approach to auto capture bar codes for the items as they are being bagged. The flood laser barcode scan approach can be used without the image matching approach or used in combination with the image matching approach. Moreover, the image matching approach can be used without the flood laser barcode scan approach or in combination with the flood laser barcode scan approach.

In an embodiment, the retail self-checkout system 300 also includes a weighing device interfaced to the one or more processors of a self-service checkout system within the retail establishment. The one or more processors executing instructions for the weight confirmation agent 303, which resides and is programmed within a non-transitory computer-readable storage medium accessible to the self-service checkout system.

The weight confirmation agent 303 is configured to compare a weight measured by the weighing device for each item against a known weight for a known item identified in the list for purposes of confirming the list of items purchased by the consumer as each item is placed in the bag by the consumer at the SSCO. This is yet a third validation approach that can be used independent of the other two discussed validation approaches or in combination with one or both of the other two validation approaches.

One now fully appreciates how a consumer can take control over their shopping time within a store to self-checkout while the store can still maintain validation of the process. The techniques substantially improve customer throughput in leaving the store and reduces store expenditures associated with store personnel and equipment needed to provide store checkout processes. Moreover, the techniques increase the likelihood of increased consumer adoption of self-checkout services offered by stores.

The above description is illustrative, and not restrictive. Many other embodiments will be apparent to those of skill in the art upon reviewing the above description. The scope of embodiments should therefore be determined with reference to the appended claims, along with the full scope of equivalents to which such claims are entitled.

The Abstract is provided to comply with 37 C.F.R. §1.72(b) and will allow the reader to quickly ascertain the nature and gist of the technical disclosure. It is submitted with the understanding that it will not be used to interpret or limit the scope or meaning of the claims.

In the foregoing description of the embodiments, various features are grouped together in a single embodiment for the purpose of streamlining the disclosure. This method of disclosure is not to be interpreted as reflecting that each claim has more features than are expressly recited in that claim. Rather, as the following claims reflect, inventive subject matter lies in less than all features of a single disclosed embodiment.

## Claims

1. A processor-implemented method programmed in a non-transitory processor-readable medium and to execute on one or more processors of a server configured to execute the method, comprising:
identifying, via the server, a consumer through interaction with a mobile app over a network connection (step 110);
receiving from the mobile app and at the server, one or more identifiers for one or more items to be purchased by the consumer (step 120);
communicating, by the server, a list for the one or more items and transaction details to the mobile app for presentation to the consumer on a display of a mobile device having the mobile app (step 130);
interacting, via the server, with the mobile app to complete purchase of the one or more items (step 140);
sending, by the server and to the mobile app a validation code that validates the completed purchase (step 150); and
acquiring, by the server, the validation code presented by a self-service checkout system (300) and providing the list back to the self-service checkout system (300) for validating each item identified in the list while the consumer bags the items at the self-service checkout system (300) (step 160).

2. The method of claim 1, wherein identifying further includes recognizing the mobile device and/or the mobile app as a previously registered mobile app linked to the consumer (step 111).

3. The method of claim 1 or 2, wherein identifying further includes performing authentication on the consumer via the mobile app via: credentials supplied by the consumer to recognize the consumer and/or via facial recognition on the consumer against a face of the consumer previously registered (step 112).

4. The method of any of claims 1 to 3, wherein identifying further includes generating a unique transaction token and providing back to the mobile app, the unique transaction token tying all communication between the mobile app and the server to the consumer and a transaction associated with the one or more items (step 113).

5. The method of any preceding claim, wherein receiving further includes obtaining each of the one or more identifiers as encoded information representing a bar code or Quick Response code that was scanned by the consumer using a scanner or a camera embedded in the mobile device and interfaced to the mobile app (step 121).

6. The method of claim 5, wherein obtaining further includes accessing a particular establishment's backend system to link the encoded information to at least an item description and an item price that are included in the transaction details for the list (step 122).

7. The method of any preceding claim, wherein communicating further includes dynamically interacting with the mobile app to remove selective items from the list along with those selective items portion of the transaction details as directed by the consumer via the mobile app (step 131).

8. The method of any preceding claim, wherein interacting further includes modifying selective portions of the transaction details based on scanned coupons presented by the consumer via the mobile app (step 141).

9. The method of any preceding claim, wherein sending further includes communicating the validation code as one of: a barcode, a Quick Response code, a string of characters, and a number (step 151).

10. A processor-implemented method programmed in a non-transitory processor-readable medium and to execute on one or more processors of a mobile device configured to execute the method, comprising:
initiating, via the mobile device, a network connection to a network-based shopping manager (step 210);
receiving, via the mobile device, a transaction token from the network-based shopping manager after successful authentication of the mobile device and a consumer associated with the mobile device (step 220);
communicating, to the network-based shopping manager and via the mobile device using the transaction token, codes for items scanned for purchase by the consumer using a scanner or camera of the mobile device (step 230);
presenting on a display of the mobile device a list with transaction details for the items as provided by the network-based shopping manager (step 240);
interacting via the mobile device with the consumer and the network-based shopping manager for completing payment of a transaction (step 250);
storing on the mobile device a validation token received from the network based shopping manager indicating the items of the list have been paid for by the consumer (step 260); and
providing the validation token to a self-service checkout system (300), the validation token validates the completed payment, when the consumer bags the items at the self-service checkout station (step 270).

11. The method of claim 12, wherein interacting further includes applying changes to the items and the transaction details on the direction of the consumer (step 251).

12. The method of claim 10 or 11, wherein providing further includes presenting the validation token as a unique transaction number or string on a display of the mobile device that the consumer views and manually enters into the self-service checkout system using a touchscreen input device of the self-service checkout system (step 272).

13. A system (300) comprising:
a scanning device configured with a scanning agent (301) implemented within a non-transitory computer-readable storage medium and that executes on one or more processors of a self-service checkout system (300); the one or more processors of the self-service checkout system (300) being configured with a validation agent (302) implemented within a non-transitory computer-readable storage medium and executing on the one or more processors;
wherein the scanning agent (301) is configured to scan a validation token from a mobile device of a consumer and present the validation token to a network-based shopping manager to acquire a list of items purchased by the consumer, the validation agent (302) being configured to activate a camera of the self-service checkout system (300) and take images of each item as it is placed in a bag by the consumer at the self-service checkout system (300), the validation agent (302) also being configured to verify a match for each captured image with a known image for a known item identified in the list for purposes of validating the list of items purchased by the consumer.

14. The system of claim 13 further comprising, a weighing device interfaced to the one or more processors of the self-service checkout system (300) that are also configured with a weight confirmation agent (303) implemented within a non-transitory computer-readable storage medium and that executes on the one or more processors, the weight confirmation agent (303) being configured to compare a weight measured by the weighing device for each item against a known weight for a known item identified in the list for purposes of confirming the list of items purchased by the consumer as each item is placed in the bag by the consumer at the self-service checkout system.

15. The system of claim 13 or 14, wherein the scanning agent (301) is further configured to flood a bagging area of the self-service checkout system (300) with multiple laser scanning lines from multiple angles to automatically capture barcodes associated the items as the consumer bags the items at the self-service checkout system (300) and the validation agent (302) is further configured to lookup barcode information for each item and cross check against known barcode information for the list.
